# EUROPEAN PATENT APPLICATION

(11) **EP 4 578 600 A1**
(43) Date of publication of application: **02.07.2025**
(21) Application number: 24219909.9
(22) Date of filing: 13.12.2024
(51) Int. Cl.: B25F 5/02

(54) **AUXILIARY WIRELESS DEVICE HOLDER UNIT FOR POWER TOOL**

(30) Priority: 19.12.2023 US 202363612017 P
(71) Applicant: Black & Decker, Inc., New Britain, CT 06053 (US)
(72) Inventor: MORENO PASTOR, Marcos A., 67160 Guadalupe N.L (MX); COATES, Marcell E., Baltimore, 21206 (US); SIKORA, Michael, Baltimore, 21230 (US); CHILDERS, Justin T., Perry Hall, 21128 (US); VALENTINE, Alastair, Baltimore, 21212 (US)
(74) Representative: SBD IPAdmin

(57) **Abstract**

A holder unit for a power tool is provided including a housing having a plurality of walls defining an open end, the housing being sized to receive an auxiliary wireless device therein through the open end. The housing is detachably mounted to a threaded opening provided on a tool housing of the power tool.

## Description

### RELATED APPLICATION

This application claims the benefit of US Provisional Patent Application No. 63/612,017, filed December 19, 2023, which is incorporated herein by reference in its entirety.

### FIELD

This disclosure relates to a power tool, and particularly to a holder unit or clip for attachment of an external auxiliary wireless device to a power tool.

### BACKGROUND

Wireless tracking of power tools and associated products within a jobsite is highly desirable, particularly for an enterprise user. Some power tools are integrally provided with wireless communication devices capable of periodically transmitting beacon signals that can be detected and used for location tracking. However, these power tools are more expensive, and some users may have no need for the wireless capabilities being offered by these tools. Additionally, some power tools, such as the DeWalt^{®} TOOL CONNECT^{™} Chip-Ready products, include a pocket formed in the housing designed to allow the operator to optionally install an audit chip into the pocket for tracking and/or wireless communication purposes. However, a limited number of tools offer this solution. These tools give the user the option to install an audit chip if they so desire. What is desirable is a means by which the audit chip can be utilized for a wide variety of existing power tools.

### SUMMARY

According to an embodiment of the invention, a holder unit for a power tool is provided including a housing having a plurality of walls defining an open end, the housing being sized to receive an auxiliary wireless device therein through the open end, wherein the housing is detachably mounted to a threaded opening provided on a tool housing of the power tool.

In an embodiment, the threaded opening is provided at a foot of the power tool for securing a belt clip to the power tool.

In an embodiment, the auxiliary wireless device includes a circuit board accommodating a wireless communication device and an energy storage unit for powering the wireless communication device. In an embodiment, the auxiliary wireless device is configured to periodically send wireless signals used for tracking and location monitoring. In an embodiment, the auxiliary wireless device is secured to the housing of the holder unit via at least a fastener received into a screw boss through the open end.

In an embodiment, a rear wall of the housing includes an opening through which a fastener is fastened to the threaded opening of the tool housing.

In an embodiment, the holder unit further comprises a snap-fit adaptor fastened to the threaded opening, wherein a rear wall of the housing includes a snap feature arranged to be secured to the snap-fit adaptor.

In an embodiment, the holder unit further includes a bracket fastened to the threaded opening, wherein the housing is arranged to be secured into the bracket.

In an embodiment, the housing is located above a first plane formed by a lower surface of the foot of the power tool. Further, in an embodiment, a second plane formed by a sidewall of a battery pack mounted to the power tool intersects a portion of the housing.

In an embodiment, the holder unit includes a mounting structure to which a belt clip is mountable.

In an embodiment, the housing intersects a first plane formed by a lower surface of the foot of the power tool such that the auxiliary wireless device is located substantially below the first plane. Further, in an embodiment, a second plane formed by a sidewall of a battery pack mounted to the power tool passes between the power tool and the housing.

In an embodiment, a power tool is provided that comprises any of the above described holder unit embodiments.

### BRIEF DESCRIPTION OF THE DRAWINGS

Fig. 1A is an exploded perspective view depicting a power tool, an auxiliary wireless device, and a holder unit for attaching the auxiliary wireless device to the power tool, according to a first embodiment;
Fig. 1B is a rear exploded view of the holder unit and the auxiliary wireless device, according to the first embodiment;
Fig. 1C is a frontal cross-sectional view of the holder unit and the auxiliary wireless device attached to the power tool, according to the first embodiment;
Figs. 1D and 1E are perspective views depicting steps for attaching the holder unit to the power tool and securing the auxiliary wireless device to the holder unit, according to the first embodiment;
Fig. 1F depicts a top cross-sectional view of the holder unit along a plane passing through bracket tabs of the holder unit, according to the first embodiment;
Fig. 2A is an exploded perspective view depicting the power tool, the auxiliary wireless device, a holder unit for attaching the auxiliary wireless device to the power tool, and a belt clip, according to a second embodiment;
Fig. 2B is a rear exploded view of the holder unit, the belt clip, and the auxiliary wireless device, according to the second embodiment;
Fig. 2C is a cross-sectional view of the holder unit, the belt clip, and the auxiliary wireless device attached to the power tool, according to the second embodiment;
Figs. 2D and 2E are perspective views depicting steps for attaching the holder unit and the belt clip to the power tool, according to the second embodiment;
Fig. 3A is an exploded perspective view depicting the power tool, the auxiliary wireless device, and a holder unit for attaching the auxiliary wireless device to the power tool via a snap-fit adaptor, according to a third embodiment;
Fig. 3B is a rear exploded view of the holder unit, the snap-fit adaptor, and the auxiliary wireless device, according to the third embodiment;
Fig. 3C is a cross-sectional view of the holder unit and the auxiliary wireless device attached to the power tool via the snap-fit adaptor, according to the third embodiment;
Figs. 3D and 3E are perspective views depicting steps for attaching the snap-fit adaptor to the power tool and the holder unit to the snap-fit adaptor, according to the third embodiment;
Fig. 4A is an exploded perspective view depicting the power tool, the auxiliary wireless device, and a holder unit for attaching the auxiliary wireless device to the power tool via a bracket, according to a fourth embodiment;
Fig. 4B is a rear exploded view of the holder unit, the bracket, and the auxiliary wireless device, according to the fourth embodiment;
Fig. 4C is a cross-sectional view of the holder unit and the auxiliary wireless device attached to the power tool via the bracket, according to the fourth embodiment;
Figs. 4D-4G are perspective views depicting steps for attaching the holder unit to the power tool and the bracket, according to the fourth embodiment;
Fig. 5A depicts a perspective view of an existing prior art audit chip device, according to an embodiment;
Fig. 5B depicts a bottom view of the prior art audit chip device holding an energy storage unit, according to an embodiment;
Fig. 5C depicts a view of a conventional design of a battery receptacle portion of a power tool that houses the audit chip device, according to an embodiment;
Figs 6A and 6B depict partial left and right perspective views of a power tool including a first set of threaded openings for a belt clip or a lanyard clip, and a second threaded opening for the holder unit and the auxiliary wireless device, according to an embodiment;
Fig. 6C depicts a partial perspective view of the power tool including the lanyard clip and the holder unit respectively coupled to the first set of threaded openings and the second threaded opening, according to an embodiment;
Fig. 6D depicts a partial perspective view of the power tool including the belt clip and the holder unit respectively coupled to the first set of threaded openings and the second threaded opening, according to an embodiment;
Fig. 6E depicts a partial bottom cross-section view of a foot portion of the power tool showing a belt clip and the holder unit mounted on the same side of the battery receptacle, according to an embodiment;
Fig. 6F depicts a partial bottom cross-section view of the foot portion of the power tool similar to Fig. 6E, showing the belt clip fastened to the second threaded opening, according to an embodiment;
Figs. 7A-7C depict exploded perspective views of a power tool including a mounting region, the auxiliary wireless device, and a cover for lateral mounting of the auxiliary wireless device to the mounting region of the power tool, according to a fifth embodiment; and
Figs. 7D-7F depict side and perspective views of the power tool with the auxiliary wireless device and the cover mounted on the mounting region, according to an embodiment.

### DETAILED DESCRIPTION

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

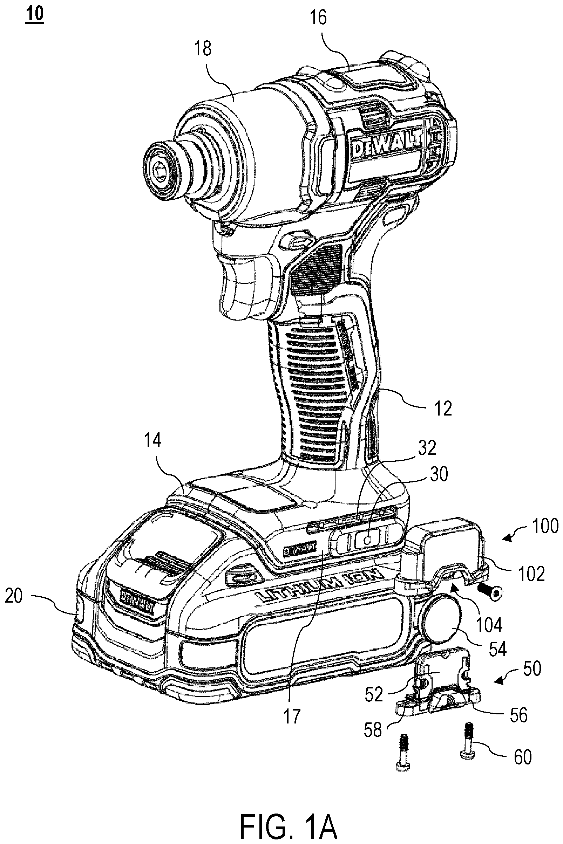

Fig. 1A is an exploded perspective view depicting a power tool 10, an auxiliary wireless device 50, and a holder unit member 100 for attaching the auxiliary wireless device to the power tool, according to a first embodiment.

In an embodiment, power tool 10 is a cordless impact driver by way of example including a housing forming a handle portion 12, a battery receptacle 14 formed on a lower end of the handle portion, a motor case 16 formed on an upper end of the handle portion to house an electric motor, and a transmission assembly 18 mounted on the housing forward of the motor case. A battery pack 20 is removeably received into engagement with the battery receptacle 14. The battery pack 20 may be, for example, a 20V max lithium-ion power tool battery pack. The battery receptacle 14 includes two sidewalls 17 located around a top mating interface of the battery pack 20, and two battery railing 15 that slidingly engage with and guide the mating interface of the battery pack 20 into a locked contact with the power tool. The power tool 10 includes control electronics (not shown) for controlling the supply of electric power from the battery pack to the electric motor, which in turn provides a rotary output through the transmission assembly. For more details related to an impact driver, reference is made to US Patent Publication No. 2023/191567 filed December 9, 2022, and US Patent Publication No. 2022/0320960 filed October 6, 2022, both of which are incorporated herein by reference in their entireties. For a detailed description of exemplary power tool battery packs, reference is made to US Patent Publication No. 2015/380697 filed June 30, 2015, which his incorporated herein by reference in its entirety. It should be understood that while power tool 10 is an impact driver by way of example, the teachings of this disclosure are not limited to one particularly power tool. Rather, power tool 10 may be any type of corded or cordless, stationary or handheld, power tool, including but not limited to, nailers, saws, grinders, impact tools, wrenches, electric hammers, drills, as well as outdoor products such as string trimmers, edgers, chain saws, etc.

Power tool 10 is commonly provided with a threaded opening 30 alongside sidewall 17 of the battery receptacle 14 (i.e., in an embodiment on a raise portion of the sidewall 17) for receiving a belt clip (not shown). Power tool 10 further includes air inlets 32 provided above the threaded opening 30 for receiving incoming cooling air into the handle 12. The belt clip is removeably attachable to the threaded opening 30 and includes a loop-shaped metal clip body that allows an operator to attach the power tool to the operator's belt or pocket. The belt clip includes legs that are securely received into the air inlets 32 as the belt clip is fastened to the threaded opening 30. For an example of the belt clip, reference is made to Patent Publication No. 2021/0367305 filed May 20, 2021, which his incorporated herein by reference in its entirety.

Conventionally, some power tools may be provided with an auxiliary wireless device, which is referred to as audit chip, as described here.

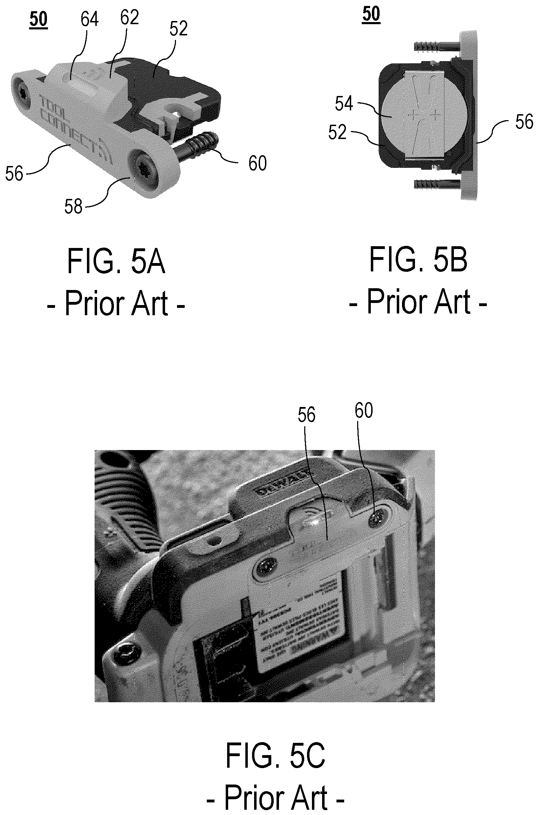

Referring to Figs. 5A and 5B, a prior art audit chip 50 is depicted by way of example. Audit chip 50 includes a main body 52 that hold an energy storage unit 54, in this example a coin cell battery. The main body 52 further houses a circuit board (not shown), which includes one or more wireless components such as an antenna, a wireless controller (e.g., a Bluetooth controller or similar wireless communication devices), etc. Audit chip further includes a front face 56 that includes two through-holes 58 for passage of fasteners 60 to secure the audit chip 50 to a power tool, and a projection 62 on which a LED indicator light 64 (that indicates when data is being transmitted) is located. The wireless components may be configured to periodically broadcast location information and a unique ID. This helps track the location of the power tool within a jobsite or identify a tool that may have bene misplaced or stolen. In some embodiments, wireless components may further be configured to broadcast operational data related to the power tool.

Fig. 5C depicts a view of a battery receptacle portion of a power tool. In this example, the power tool is provided with a pocket formed alongside a wall of the battery railing of the battery receptacle for removeably receiving the audit chip 50. The pocket is integrally formed into the housing of the power tool and positions the front face 52 of the audit ship along the lower surface of the battery railing. An example of this arrangement can be found in the DeWalt^{®} TOOL CONNECT^{™} Chip-Ready products, which are designed to allow the operator to optionally install the audit chip into the chip pocket for tracking and/or wireless communication purposes.

Referring back to Fig. 1A, power tool 10 is a type of power tool that is not provided with an integral pocket for receiving the auxiliary wireless device 50. Specifically, power tool 10 in this example may include any existing power tool not designed with an integral pocket, where the operator may desire to add tracking and data communication capabilities to the power tool. Here, according to an embodiment of the invention, a holder unit 100 is provided for receiving the auxiliary wireless device 50 and securing it to the power tool 10. In particular, holder unit 100 is designed to be fastened to the existing threaded opening 30 of the power tool 10 conventionally provided for a belt clip.

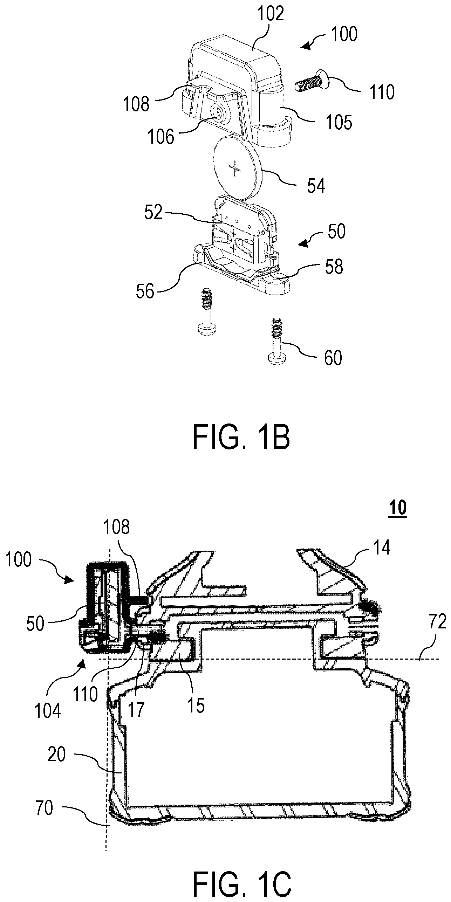

Fig. 1B is a rear exploded view of the holder unit 100 and the auxiliary wireless device 50, according to the first embodiment. As shown here, and with continued reference to Fig. 1A, holder unit 100 includes a housing 102 including front and rear walls, two sidewalls, and an upper wall, together forming cavity therein accessible via a lower open face 104. The cavity is sized to receive the main body 52 of the auxiliary wireless device 50 including the energy storage unit 54. When the auxiliary wireless device 50 is fitted inside the cavity, the front face 56 lower open face 104 is fittingly positioned within the lower open face 104 of the holder unit 100.

In an embodiment, internal to the housing 102 are two screw bosses 105 aligned with through-holes 58 of the auxiliary wireless device 50 and arranged to receive the fasteners 60 to secure the auxiliary wireless device 50 within the housing 102. As such, screw bosses 105 are located on either side of the main body 52 once the auxiliary wireless device 50 is received within the housing 102.

In an embodiment, housing 102 includes a through-hole 106 formed in its rear wall arranged to receive a fastener 110 for attachment to threaded opening 30 of the power tool 10. Further, in an embodiment, housing 102 includes one or more bracket tabs 108 projecting from the rear wall above the through-hole 106 arranged to engage the air inlets 32 of the power tool 10 to rotationally and structurally fix the holder unit 100 relative to the power tool 10.

Fig. 1C is a cross-sectional view of the holder unit 100 and the auxiliary wireless device 50 attached to the power tool 10, according to the first embodiment. As shown here, an advantage of this embodiment is that the holder unit 100 including the auxiliary wireless device 50 is provided substantially close to the sidewall 17 of the battery receptacle 14, and above a first plane 70 formed by a lower surface of the battery railing 15 of the battery receptacle 14. In an embodiment, the holder unit 100 sits relatively close to the power tool, with a second plane 72 formed by sidewall of the battery pack 20 passing through the holder unit 100.

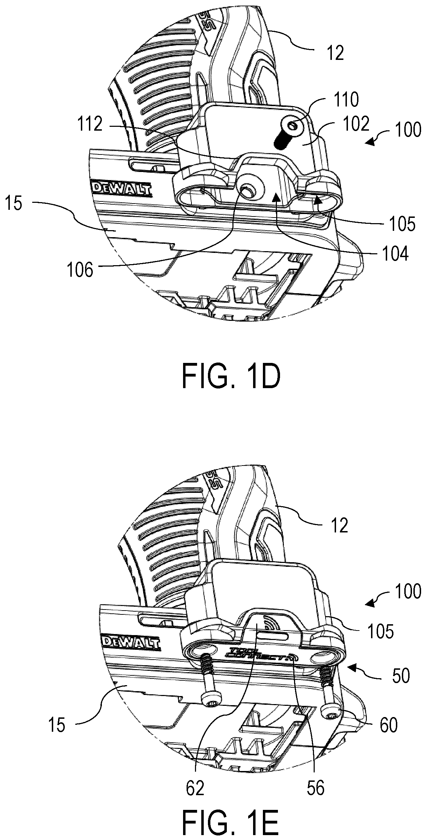

Figs. 1D and 1E are perspective views depicting steps for attaching the holder unit to the power tool and securing the auxiliary wireless device to the holder unit, according to the first embodiment. In an embodiment, auxiliary wireless device 50 is initially attached to the power tool 10 by aligning the through-hole 106 with threaded opening 30 and inserting the bracket tabs 108 within the corresponding air inlets 32. The fastener 110 is received through a recessed portion 112 of the front wall of the housing 102 of the holder unit and secured into the threaded opening 30. The auxiliary wireless device 50 is then positioned inside the holder unit 100, with the fasteners 60 secured from the bottom and into screw bosses 105. The projection 62 of the auxiliary wireless device 50 including the LED indicator light 64 is located within the recessed portion 112 of the housing 102.

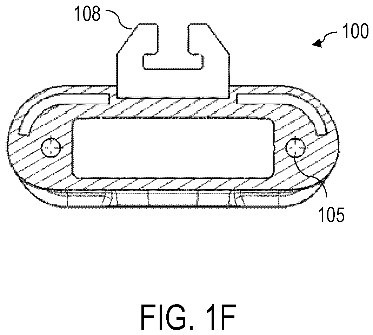

Fig. 1F depicts a top cross-sectional view of the holder unit 100 along a plane passing through bracket tabs 108 of the holder unit 100, according to the first embodiment. Optionally, in an embodiment, bracket tabs 108 may be made of a single metal piece stamped to include two tabs that penetrate into the air inlets 32 of the power tool 10. The rest of the holder unit 100 may be made of plastic material insert-molded to the metal piece. Alternatively, in an embodiment, the bracket tabs 108 may be made of plastic molded with the rest of the holder unit 100.

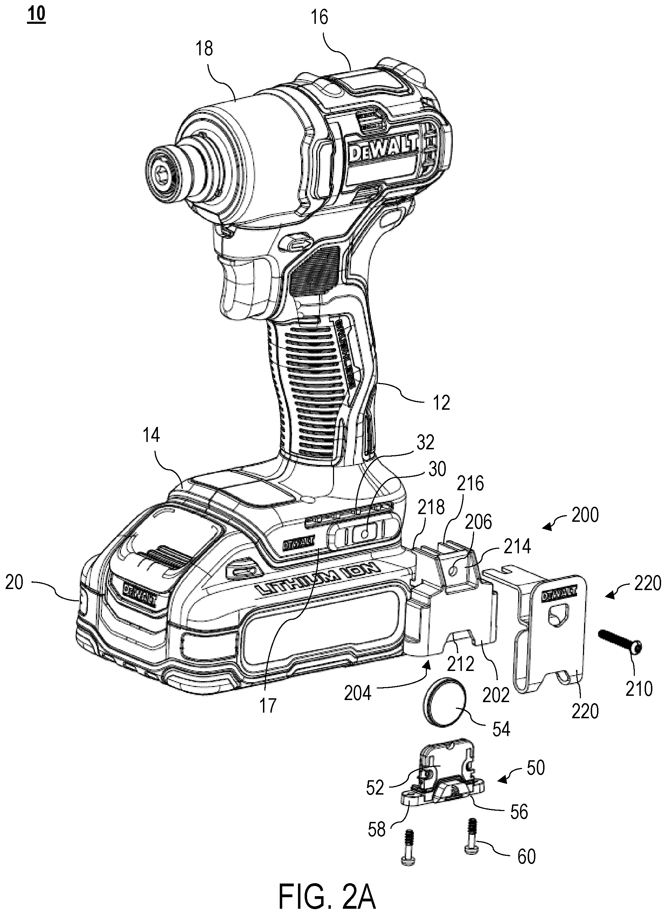

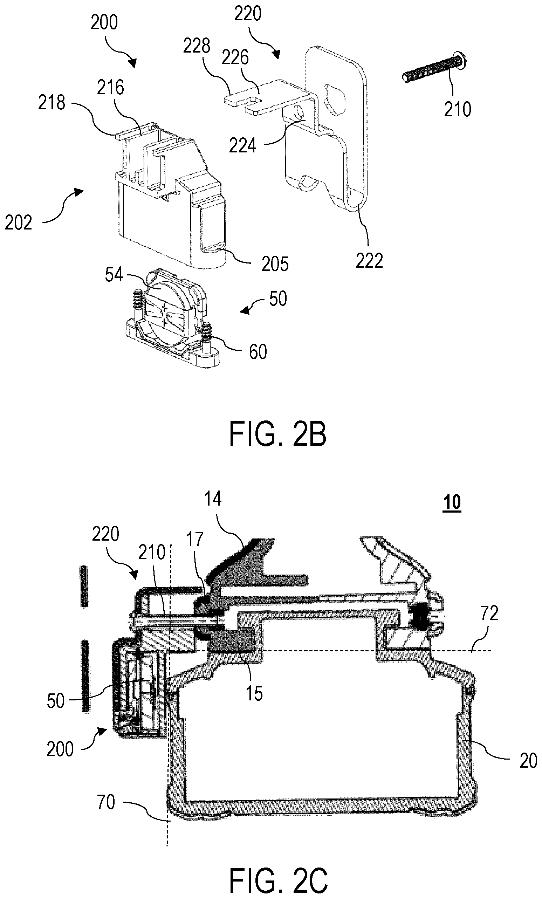

Fig. 2A is an exploded perspective view depicting the power tool 10, the auxiliary wireless device 50, and a holder unit 200 including a belt clip 220, according to a second embodiment. Fig. 2B is a rear exploded view of the holder unit 200, the belt clip 200, and the auxiliary wireless device 50, according to the second embodiment.

In an embodiment, holder unit 200 includes many of the features discussed above, including a housing 202 including front and rear walls, two sidewalls, and an upper wall, together forming cavity therein accessible via a lower open face 204; screw bosses 205 for securing the auxiliary wireless device 50, a recessed portion 212, etc. In addition, the holder unit 200 includes a structure to support the belt clip 220, which allows the operator to attach the power tool to the operator's belt or pocket.

In an embodiment, the housing 202 includes a mounting structure formed above the four walls of the housing and the cavity. The mounting structure includes a recessed front face 214 through which a through-hole 206 for receiving a fastener 210 is formed. The mounting structure further includes a plurality of rear-extending walls 216 that are shaped to come into contact with the outer wall of the battery receptacle 14 around the threaded opening 30. In an embodiment, one or more of the rear-extending walls 216 include tabs 218 projecting from their upper rear ends arranged to engage the air inlets 32 of the power tool 10 to rotationally and structurally fix the holder unit 200 relative to the power tool 10. In an embodiment, the tabs 218 are provided on the outer rear-extending walls, which have smaller heights than the inner rear-extending walls.

In an embodiment, the belt clip 220 formed of metal and includes a loop structure 222 arranged to be secured to an operator's belt or pocket, a mounting portion 224 including a center opening arranged to be mounted on the recessed front face 214 of the holder unit 200, and an upper extension 226 that extends over the top of the mounting structure of the holder unit 200 and includes two end tabs 228 that engage the air inlets 32 of the power tool 10 to rotationally and structurally fix the belt clip 220 relative to the power tool 10. In an embodiment, the upper extension 226 is mounted on the inner rear-extending walls and between top portions of outer rear-extending walls of the holder unit 220.

In an embodiment, the belt clip 220 may include a smaller upper extension 226 than depicted so it is only anchored to the mounting structure of the holder unit 200. In an embodiment, the mounting structure of the housing 202 may be made of metal or other structurally rigid material to support the belt clip 200. This arrangement allows use of conventionally and commonly available belt clips, such as DeWalt ^{®} branded belt clips, with the holder unit 200.

Fig. 2C is a cross-sectional view of the holder unit 200, the belt clip 220, and the auxiliary wireless device 50 attached to the power tool 10, according to the second embodiment. As shown here, and in contrast to Fig. 1C, while the mounting structure of the holder unit 200 abuts the sidewall 17 of the battery receptacle 14, the cavity portion of the holder unit 200 that holds the auxiliary wireless device 50 is located predominantly adjacent the battery pack 20. Specifically, in an embodiment, the auxiliary wireless device 50 is located substantially below the first plane 70 formed by the lower surface of the battery railing 15 of the battery receptacle 14 and outside the second plane 72 formed by the sidewall of the battery pack 20.

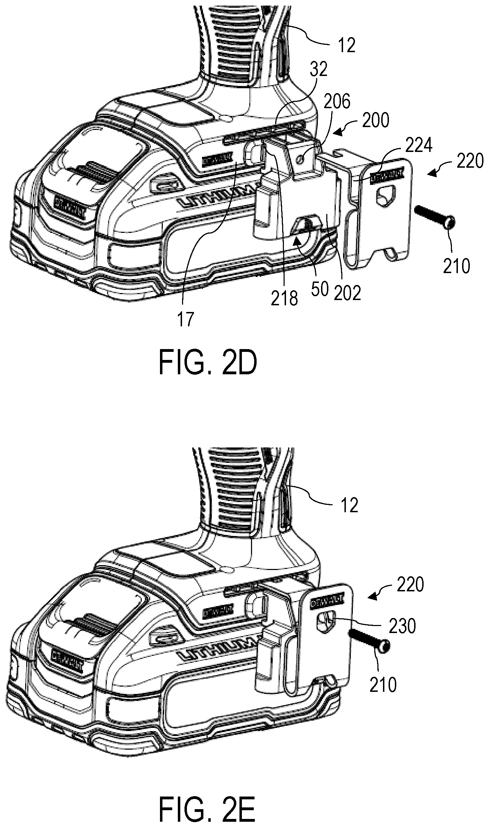

Figs. 2D and 2E are perspective views depicting steps for attaching the holder unit 200 and the belt clip 220 to the power tool 10, according to the second embodiment. In an embodiment, as shown here, the auxiliary wireless device 50 is initially secured and fastened to the holder unit 200. The holder unit 200 is then positioned in place alongside the sidewall 17 of the battery receptacle 14, with through-hole 206 of the holder unit 200 aligned with the threaded opening 30. The fastener 210 may then be fastened through the through-hole 206 to secure the holder unit 200 alone. Alternatively, the belt clip 220 is initially positioned on the holder unit 220, and the fastener 210 is received through an opening 230 on the front face of the belt clip 220 to fasten a mounting portion 224 of the belt clip and the holder unit 200 together to the power tool 10.

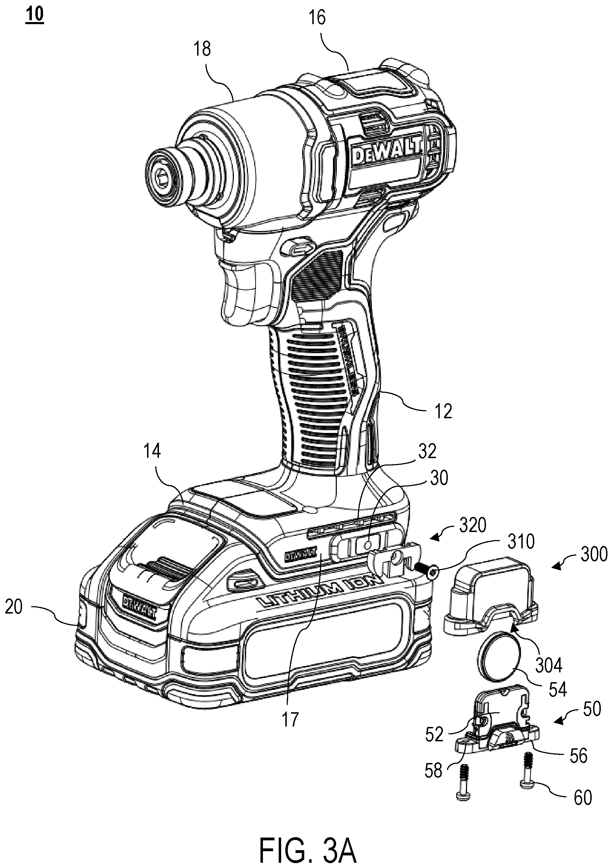

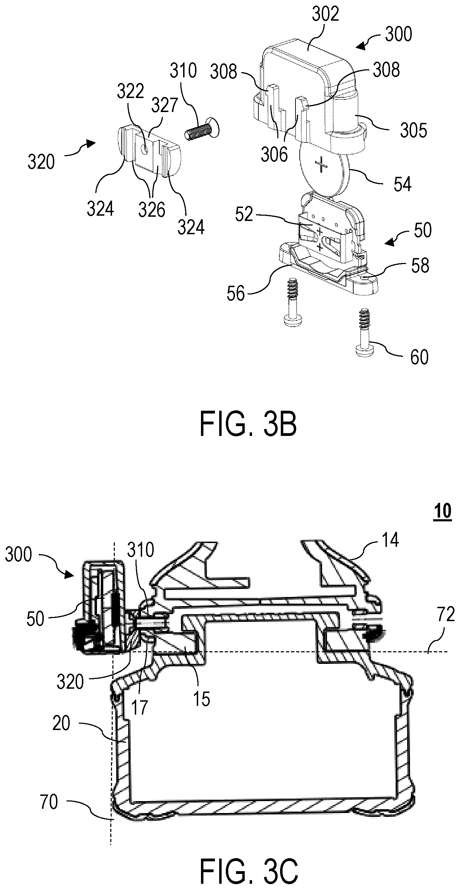

Fig. 3A is an exploded perspective view depicting the power tool 10, the auxiliary wireless device 50, and a holder unit 300 for attaching the auxiliary wireless device to the power tool via a snap-fit adaptor 320, according to a third embodiment. Fig. 3B is a rear exploded view of the holder unit 300, the snap-fit adaptor 320, and the auxiliary wireless device 50, according to the third embodiment.

As shown in these figures, holder unit 300 is similar to holder unit 100 discussed above with reference to the first embodiment, including a housing 302 including front and rear walls, two sidewalls, and an upper wall, together forming cavity therein accessible via a lower open face 304; screw bosses 305 for securing the auxiliary wireless device 50, a recessed portion 312 on its front wall, etc. In fact, in an embodiment, the holder unit 300 has substantially the same structure as holder unit 100 and is positioned similarly to the holder unit 100. The difference between the two embodiments is that holder 300 is secured to the power tool via the snap-fit adaptor 320. This allows the operator to position and secure the auxiliary wireless device 50 within the holder unit 300 prior to mounting the holder unit 300 onto the power tool 10. By contrast, in the first embodiment, the fasteners 110 is received through the body of the holder unit 100 for fastening to the power tool, and the auxiliary wireless device 50 can therefore only be secured within the holder unit 110 after the fastener 100 has been fastened.

In an embodiment, snap-fit adaptor 320 is initially secured to the power tool by a fastener 310 received through a through-hole 322 of the snap-fit adaptor 320 and fastened to threaded opening 30 of the power tool 10. In an embodiment, snap-fit adaptor 320 includes two side legs 324 forming two rear channels 326 with its interior main body 327 and the sidewall 17 of the battery receptacle 14.

In an embodiment, the holder unit 300 includes two flexible posts 306 attached on their first ends to a lower portion of the rear wall of the holder unit 300 and including two snap chamfers 308 on their second ends. The flexibility of the flexible posts 306 allows the snap chamfers 308 to be received within the rear channels 326 slide therein until they reach an upper surface of the snap-fit adaptor 320.

Fig. 3C is a cross-sectional view of the holder unit 300 and the auxiliary wireless device 50 attached to the power tool via the snap-fit adaptor 320, according to the third embodiment. As shown here, similarly to holder unit 100 of the first embodiment, the holder unit 300 including the auxiliary wireless device 50 is provided substantially close to the sidewall 17 of the battery receptacle 14, and substantially above the first plane 70 formed by a lower surface of the battery railing 15 of the battery receptacle 14. In an embodiment, the second plane 72 formed by sidewall of the battery pack 20 passing through the holder unit 300, although due to the addition of the snap-fit adaptor 320, the holder unit 300 is located further away from the power tool 10 in comparison to holder unit 100 of the first embodiment.

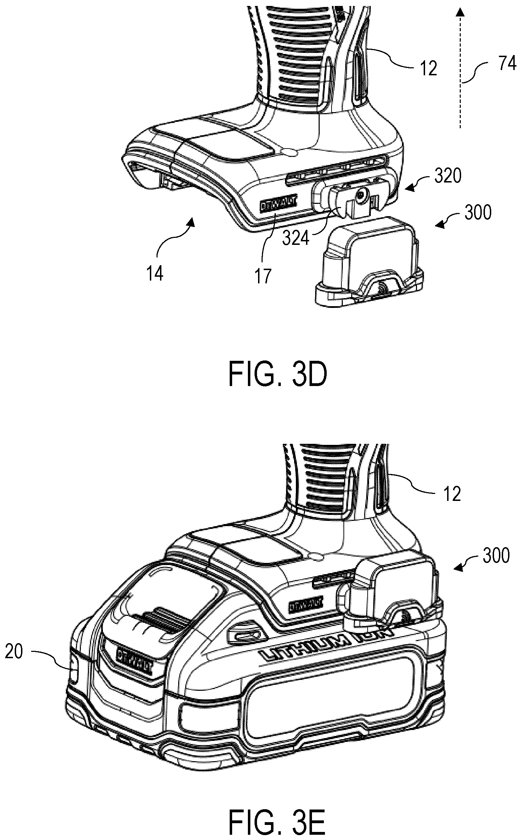

Figs. 3D and 3E are perspective views depicting steps for attaching the holder unit to the snap-fit adaptor, according to the third embodiment. As shown here and with continued reference to Fig. 3B, in an embodiment, after the snap-fit adaptor 320 is fastened to the power tool, the holder unit 300 is secured to the snap-fit adaptor 320 by sliding it along the direction 74 (i.e., in the upward direction in this figure, or a direction that is substantially perpendicular to a lower plane of the battery receptacle 14). This is done by aligning the snap chamfers 308 into engagement with the rear channels 326 and forcing the holder unit 300 up along direction 74 until the snap chamfers 308 snap in place. In an embodiment, these steps are preferably performed while the battery pack 20 has not been mounted.

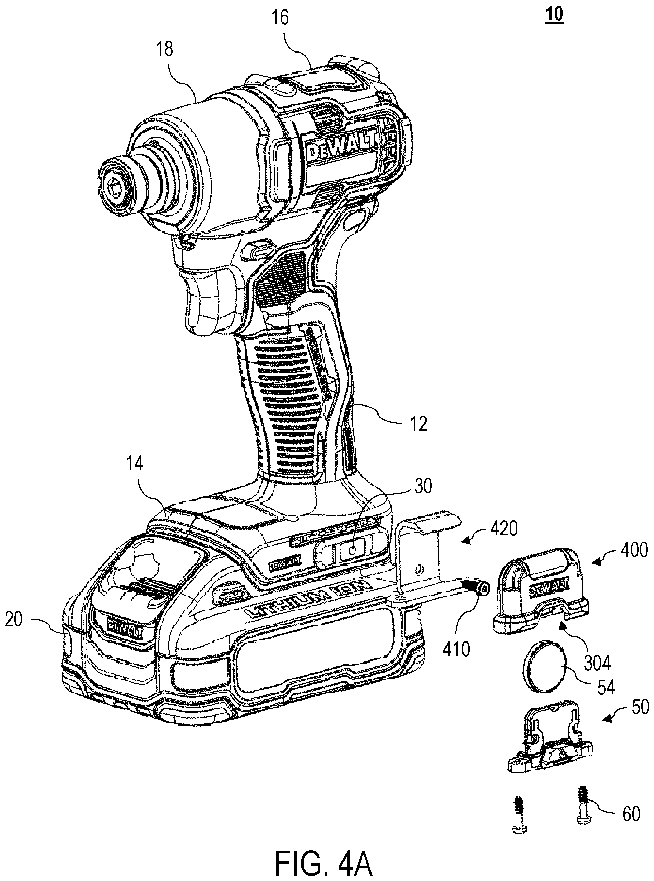

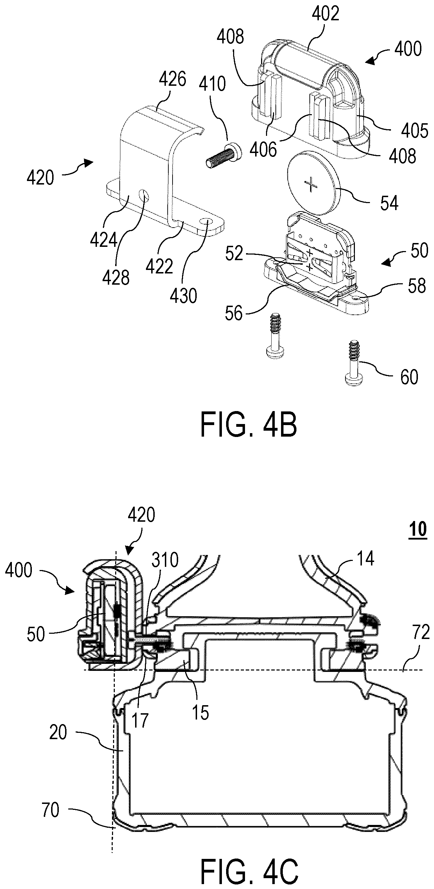

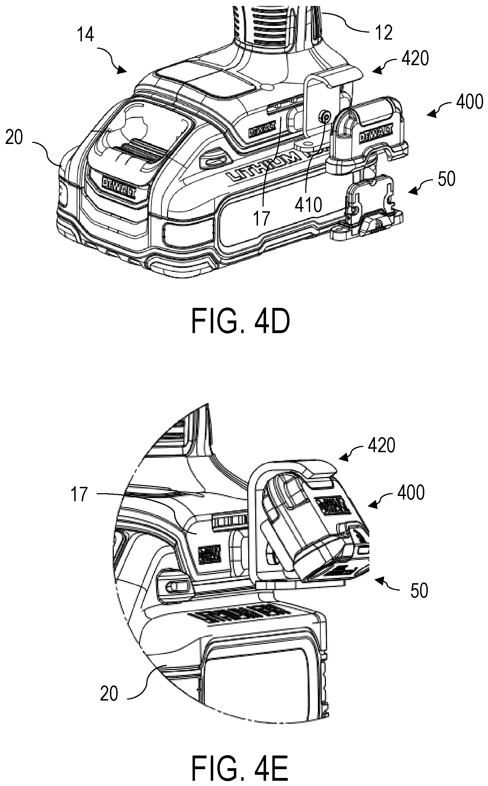

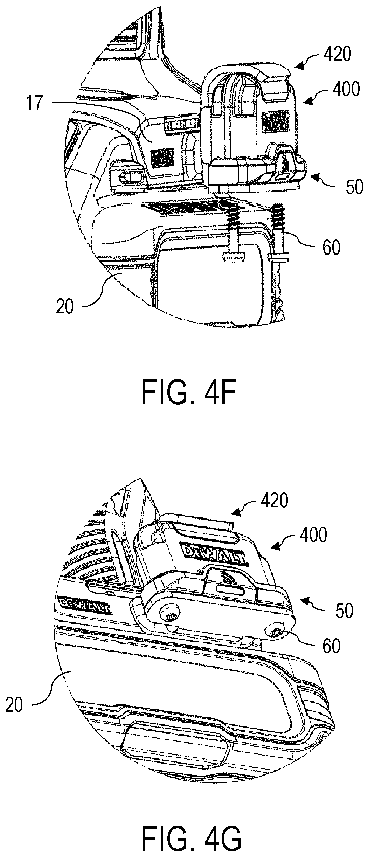

Fig. 4A is an exploded perspective view depicting the power tool 10, the auxiliary wireless device 50, and a holder unit 400 for attaching the auxiliary wireless device to the power tool via a bracket 420, according to a fourth embodiment. Fig. 4B is a rear exploded view of the holder unit 400, the bracket 420, and the auxiliary wireless device 50, according to the fourth embodiment.

As shown in these figures, holder unit 400 is similar to holder units 100 and 300 discussed above with reference to the first and third embodiments, including a housing 402 including front and rear walls, two sidewalls, and an upper wall, together forming cavity therein accessible via a lower open face 404; screw bosses 405 for securing the auxiliary wireless device 50, a recessed portion 412 on its front wall, etc. In fact, in an embodiment, the holder unit 400 has substantially the same structure as holder unit 100 and is positioned similarly to the holder unit 100. The difference in this embodiment is that holder unit 400 is secured to the power tool via the bracket 420. The bracket 420 provides a simple structure for the operator to attach or detach the holder unit 400.

In an embodiment, bracket 420 is initially secured to the power tool by a fastener 410 received through a through-hole 428 of the snap-fit adaptor 320 and fastened to threaded opening 30 of the power tool 10. In an embodiment, bracket 420 is a metal piece forming a C-bracket design, and includes a base 422, a main body 424 extending substantially perpendicularly from one side of the base 422 for coupling to the power tool, and a top curved C-shaped portion 426 that is shaped to flexibly retain the top wall of the housing 402. The through-hole 428 is located within the main body 424 for securing the main body 424 against the power tool 10. Two additional through-holes 430 are provided in the base 422 for fastening the auxiliary wireless device 50 via fasteners 60.

In an embodiment, the holder unit 400 includes two inner ribs 406 provided to be in contact with the main body 424, and two outer ribs 408 provided to be positioned along the edges of the main body 424, when the holder unit 400 is received within the bracket 420. In an embodiment, inner ribs 406 may be made of flexibly deformable material such as rubber. In an embodiment, inner ribs 406 and 408 ensure that the holder unit 400 is firmly secured within the bracket 420.

Fig. 4C is a cross-sectional view of the holder unit 400 and the auxiliary wireless device 50 attached to the power tool via the bracket 420, according to the fourth embodiment. As shown here, similarly to holder units 100 and 300 discussed above, the holder unit 400 including the auxiliary wireless device 50 is provided substantially close to the sidewall 17 of the battery receptacle 14, and substantially above the first plane 70 formed by a lower surface of the battery railing 15 of the battery receptacle 14. In an embodiment, the second plane 72 formed by sidewall of the battery pack 20 passes through the holder unit 300. Since there is no snap-fit adaptor 320, the holder unit 400 is located closer to the power tool 10 in comparison to holder unit 300 of the third embodiment.

Figs. 4D-4G are perspective views depicting steps for attaching the holder unit 400 to the power tool 10 via the bracket 420, according to the fourth embodiment. As shown here, after the bracket 420 is fastened to the power tool, the holder unit 400 (including the auxiliary wireless device 50 but without the fasteners 60) is secured to the bracket 420 by sliding a top wall of the holder unit 400 into the C-shaped portion 426 at an angle, and pivoting the bottom of the holder unit 400 in sliding contact with the base 422. The fasteners 50 are then received through the through-holes 430 of the base 422 and through-holes 58 of auxiliary wireless device 50 to fastened into screw bosses 408 of the holder unit 400. This arrangement allows the bracket 420 to be mounted to the power tool, and the holder unit 400 including the auxiliary wireless device 50 to be secured to the bracket 420, even when the battery pack 20 is coupled to the power tool.

In any of the embodiments described above, the holder unit is designed to be mounted onto existing power tools and secured to a threaded opening 30 commonly provided in existing power tools for attachment of a belt clip. This enables power tool owners and operators to add wireless tracking and location capabilities to existing power tools. Further, in an embodiment, the auxiliary wireless device 50 may be configured to provide fully wireless communication capacities by sensing operational parameters of the power tool, or receiving operational parameters related to the power tool, and communicating that information wirelessly to a central device. As such, power tool owners and operators are able to incorporate wireless data communication capabilities to their existing power tools.

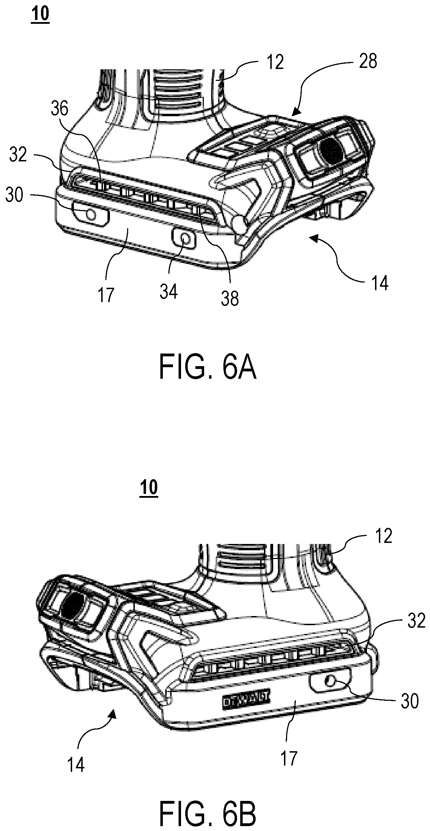

Alternatively, the power tool 10 may be provided with a second threaded opening 34 provided for the tool holder, according to an embodiment, as shown in Figs. 6A-6D. In an embodiment, the tool holder may be made according to any of the above-described embodiments, though tool holder 100 is shown and described herein by way of example.

Figs 6A and 6B depict partial left and right perspective views of power tool 10 including first threaded openings 30 which, as previously described, as provided for securing a belt clip or a lanyard clip, and a second threaded opening 34 for securing the holder unit 100 and the auxiliary wireless device 50, according to an embodiment. In an embodiment, first threaded openings 30 are provided adjacent a rear end of the battery receptacle 14, i.e., adjacent rear ends of the sidewall 17 opposite one another. The second threaded opening 34 is provided on one of the two sidewalls 17 near a front end of the battery receptacle 14, i.e., near the front opening of the battery receptacle 14 through which the battery pack is slidingly received.

In an embodiment, air inlets 32 for receiving cooling air are provided on both sides of the battery receptacle above the sidewalls 17 such that, on the side that includes the second threaded opening 34, the air inlet 32 is located above both the first threaded opening 30 and the second threaded opening 34. In an embodiment, each air inlet 32 includes a series of ribs, where the first threaded opening 30 is aligned with a rear rib 36 of the air inlet 32, and second threaded opening 34 is aligned with a front rib 38 of the air inlet 32.

In an embodiment, power tool 10 includes a mode-selection interface 28 mounted above the battery receptacle 14. The mode-selection interface 28 may be configured to, for example, allow the user to set a speed or torque setting for the operation of the power tool. In an example, the mode-select interface 28 may include a pushbutton that the user can press to toggle between the modes of operation, and one or more LEDs that indicate the selected mode of operation. In an embodiment, the mode-selection interface 28 is originated along an axis that traverses the battery receptacle 14. In an embodiment, the second threaded opening 34 is aligned with the mode-selection interface 28. In other words, a vertical plane passing through the second threaded opening 34 and the front rib 38 passes through the mode-selection interface 28.

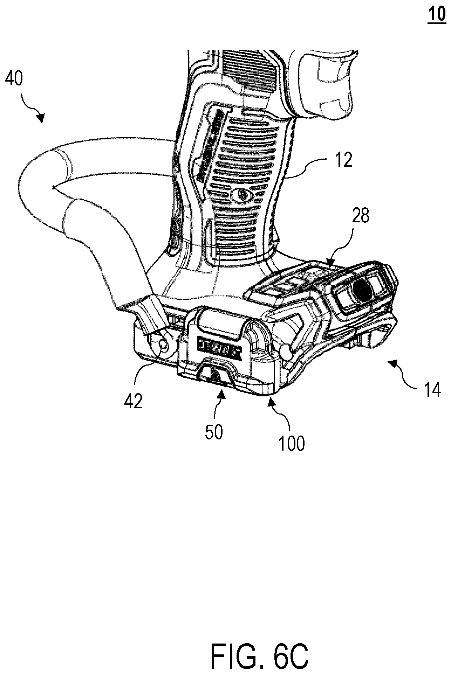

Fig. 6C depicts a partial perspective view of the power tool including a lanyard clip 40 and the holder unit 100 respectively coupled to the first threaded openings 30 and the second threaded opening 34, according to an embodiment. As shown here, the lanyard clip 40 is coupled to both of the first threaded openings 30 at the rear of the battery receptacle 14 via a fastener 42. A lanyard clip 40 allows a user to attach a tether to the tool 10 to avoid damage to the tool in the event of a fall. In an embodiment, holder unit 100 is secured to the second threaded opening 34 without interference with the lanyard clip 40.

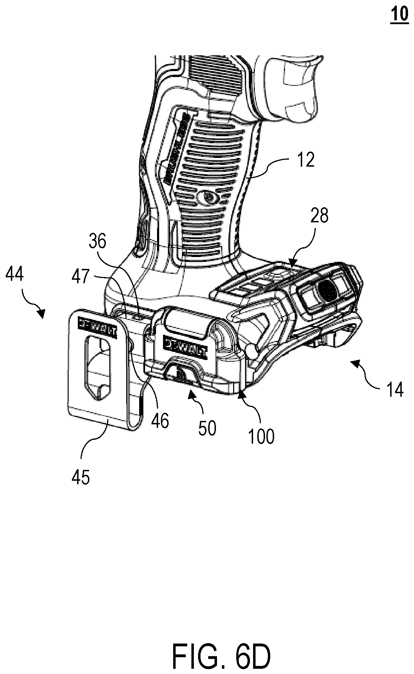

Fig. 6D depicts a partial perspective view of the power tool including a belt clip 44 and the holder unit 100 respectively coupled to the first threaded openings 30 and the second threaded opening 34, according to an embodiment. In an embodiment, the belt clip 44 may be coupled to the first threaded openings 30 on either side of the tool 10. The second threaded opening 34 is distanced from the first threaded opening 30 such that, when the belt clip 44 and the holder unit 100 are mounted on the same side of the battery receptacle 14, as shown in Fig. 6D, the belt clip 44 and the holder unit 100 are located side-by-side with a small gap (e.g., approximately less than 2 mm) therebetween. In an embodiment, the belt clip 44 includes a clip loop 45 arranged to attach to a belt of a user, a through-hole arranged to be coupled to the first threaded opening 30 via a fastener 46, and a pair of tabs 47 arranged to fit into air inlet 32 around the rear rib 36.

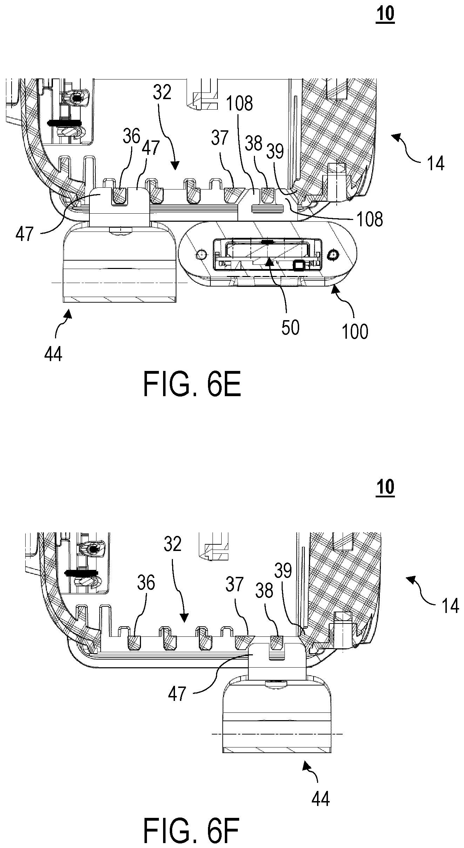

Fig. 6E depicts a partial bottom cross-section view of a foot portion of the power tool 10 showing the belt clip 44 and the holder unit 100 mounted on the same side of the battery receptacle 14, according to an embodiment. In this view, the belt clip 44 is fastened to the first threaded opening 30 (not shown) and the tabs 47 of the belt clip 44 are received into the air inlet 32 around the rear rib 36. In this manner, the belt clip 44 is fixed to the tool 10 and the tabs 47 prevent rotation of the belt clip 44 around the pivot axis of the fastener 46. Similarly, the holder unit 100 is fastened to the second threaded opening 34 (not shown) and the bracket tabs 108 are received into the air inlets 32 around the front rib 38. In this manner, the holder unit 100 is fixed to the tool 10 and the bracket tabs 108 prevent rotation of the holder unit 100 around the fastener 110.

Fig. 6F depicts a partial bottom cross-section view of the foot portion of the power tool 10 similar to Fig. 6E, showing the belt clip 44 fastened to the second threaded opening 34, according to an embodiment. As shown here, and with continued reference to Fig. 6E, in an embodiment, one or more of the ribs 37 and/or sidewalls 39 of the air inlets 32 proximate the front rib 38 are provided with geometry that block insertion of the tabs 47 of the belt clip 44, but to allow insertion of the bracket tabs 108 of the holder unit 100. This ensures that the belt clip 44 is secured to the first threaded opening 30, but not to the second threaded opening 34. In an embodiment, as shown in Fig. 6E, rib 37 and sidewall 39 that are immediately adjacent the front rib 38 are provided with sloped surfaces that penetrate into the air inlets 32 and match a sloped shape of the bracket tabs 108 of the holder unit 100. Therefore, the rib 37 and the sidewall 39 do not interfere with the insertion of the bracket tabs 108 into the air inlet 32s. However, as shown in Fig. 6F, the rib 37 and the sidewall 39 block entry of the tabs 47 of the belt clip 44, and therefore prevent a user from being able to mount the belt clip 44 into the second threaded opening 34.

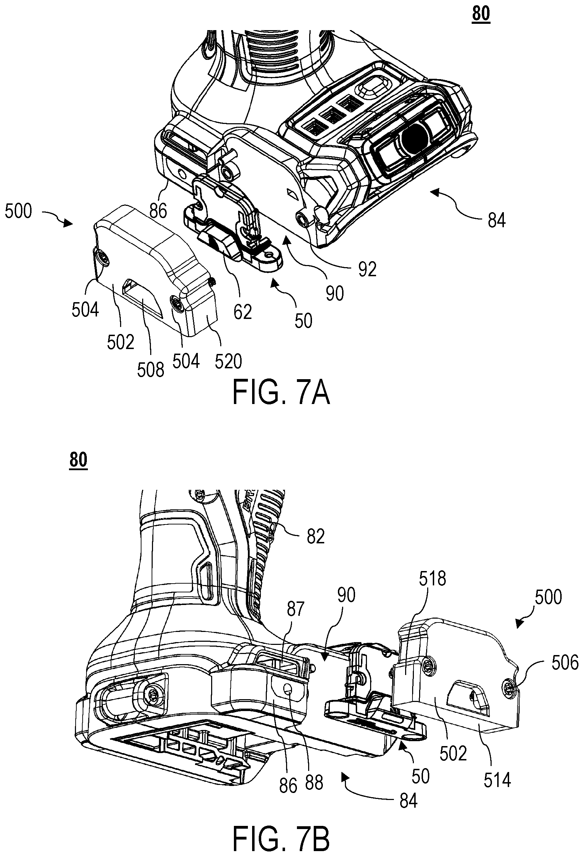

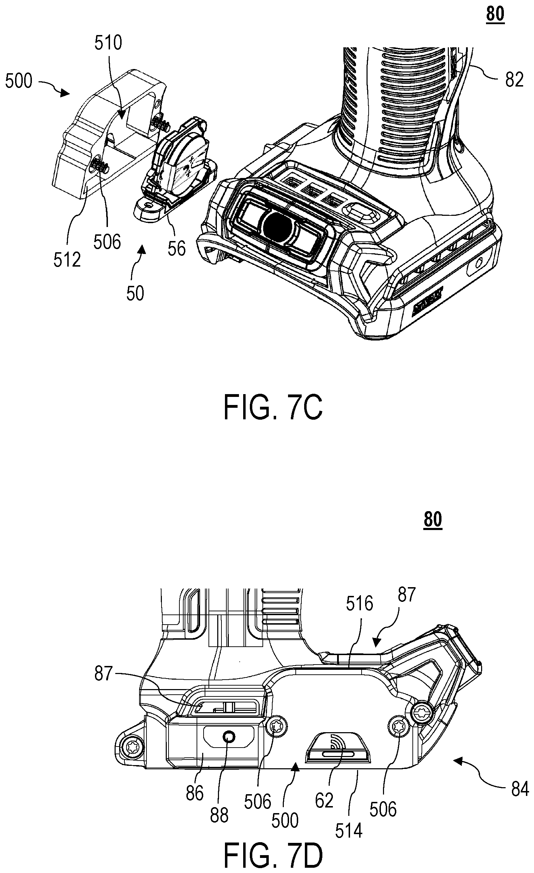

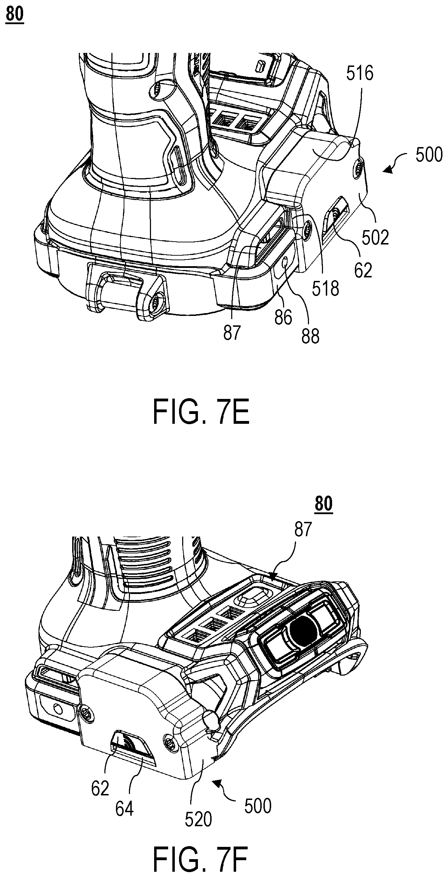

The above-described embodiments generally describe a unitary holder unit that is designed to receive and support the auxiliary wireless device 50 and is removably mountable to a side of a power tool 10 via a screw. In an alternative (fifth) embodiment, described here with reference to Figs. 7A-7F, an alternative arrangement is described. Here, the auxiliary wireless device 50 is laterally mounted into a recessed mounting surface on a side of the battery receptacle of the power tool and captured via a laterally-mounted cover. These features are described here in detail.

Figs. 7A-7C depict exploded perspective views of a power tool 80 including a recessed mounting region 90, the auxiliary wireless device 50, and a cover 500 for lateral mounting of the auxiliary wireless device to the mounting region 90, according to the fifth embodiment of the invention.

In an embodiment, power tool 80 includes many of the same features as power tool 10 described above, including a handle 82, a battery receptacle 84 including a sidewall 86, air inlets 87 formed in the sidewall 86 for receiving cooling air, and a threaded opening 88 provided on a rear end of the sidewall 86 for receiving a belt clip (not shown) or a lanyard clip (not shown).

In an embodiment, the recessed mounting region 90 is formed in the sidewall 86 and occupies approximately 50% to 80% of an axial length of the sidewall 86. The recessed mounting region 90 includes a substantially planer surface and two screw bosses 92 that project from the planer surface and include threaded openings therein. In an embodiment, the planar surface of the recessed mounting region 90 is recessed from an outer surface of the sidewall 86 by a width that corresponds approximately the thickness of the auxiliary wireless device 50, e.g., by 6 mm to 14 mm. The two screw bosses 92 are located so as to be positioned on two sides of the auxiliary wireless device 50.

In an embodiment, the cover 500 is mounted on the recessed mounting region 90 to capture the auxiliary wireless device 50. The cover 500 includes an outer body 502 bound by a lower wall 514, an upper wall 516, a rear wall 518, and a front wall 520. An interior body of the cover 500 includes a cavity 510 shaped to receive the auxiliary wireless device 50 and includes two recesses 512 that receive the front face 56 of the auxiliary wireless device 50. The cover 500 includes two through-holes 504 aligned with the screw bosses 92, through which two fasteners 506 are fastened into the screw bosses 92.

Figs. 7D-7F depict side and perspective views of the power tool 80 with the auxiliary wireless device 50 and the cover 500 mounted on the mounting region 90, according to an embodiment. In an embodiment, the outer body 502 of the cover 500 projects from the sidewall 86 by no more than 2 mm. Furthermore, the upper wall 516 of the cover 500 is located along a plane that is below an upper surface of the foot of the power tool, e.g., below a plane of the mode-selection interface 87, similar to mode-selection interface 28 previously described. Overall, the above-described arrangement of the recessed mounting region 90 and the cover 500 provides a low profile design for attaching the auxiliary wireless device 50 to an exterior part of the power tool 80 without interfering with power tool usage and operation.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A holder unit for a power tool, comprising:
a housing having a plurality of walls defining an open end, the housing being sized to receive an auxiliary wireless device therein through the open end,
wherein the housing is detachably mounted to a threaded opening provided on a tool housing of the power tool.

2. The holder unit of claim 1, wherein the auxiliary wireless device includes:
a circuit board accommodating a wireless communication device; and
an energy storage unit for powering the wireless communication device,
wherein the auxiliary wireless device is configured to periodically send wireless signals used for tracking and location monitoring.

3. The holder unit of claim 1 or 2, wherein the auxiliary wireless device is secured to the housing of the holder unit via at least one fastener received into a screw boss through the open end.

4. The holder unit of any preceding claim, wherein a rear wall of the housing includes an opening through which a fastener is fastened to the threaded opening of the tool housing.

5. The holder unit of any preceding claim, further comprising, wherein a rear wall of the housing includes a snap feature arranged to be secured to a snap-fit adaptor fastened to the threaded opening.

6. The holder unit of any preceding claim, wherein the housing is arranged to be secured into a bracket fastened to the threaded opening.

7. The holder unit of any preceding claim, further comprising a mounting structure to which a belt clip is mountable.

8. A power tool comprising:
a tool housing;
a threaded opening provided on the tool housing;
a holder unit as claimed in any of the preceding claims.

9. The power tool of claim 8, wherein the threaded opening is provided at a foot of the power tool for securing a belt clip or a lanyard clip to the power tool.

10. The power tool of claim 8 or 9, wherein a foot of the power tool forms a battery receptacle including a sidewall, wherein the sidewall includes the threaded opening at a front portion thereof and an additional threaded opening at a rear portion thereof for securing a belt clip or a lanyard clip to the power tool.

11. The power tool of any of claims 8 to 10, wherein the housing is located above a first plane formed by a lower surface of the foot of the power tool.

12. The power tool of any of claims 8 to 11, wherein a second plane formed by a sidewall of a battery pack mounted to the power tool intersects a portion of the housing.

13. The power tool of any of claims 8 to 12, wherein the housing intersects a or the first plane formed by the lower surface of the foot of the power tool such that the auxiliary wireless device is located substantially below the first plane.

14. The power tool of claim 13, wherein a or the second plane formed by the sidewall of the battery pack mounted to the power tool passes between the power tool and the housing.
